# EUROPEAN PATENT APPLICATION

(11) **EP 4 620 310 A1**
(43) Date of publication of application: **24.09.2025**
(21) Application number: 23891564.9
(22) Date of filing: 14.11.2023
(51) Int. Cl.: A23L 2/52, A23L 2/00, A23L 2/02, C12G 3/06

(54) **FRUIT FLAVOR BEVERAGE, AND METHOD FOR ENHANCING FRUITINESS OF FRUIT FLAVOR BEVERAGE**

(30) Priority: 15.11.2022 JP 2022182327
(71) Applicant: Asahi Group Holdings, Ltd., Tokyo 130-8602 (JP); Asahi Breweries, Ltd., Tokyo 130-8602 (JP)
(72) Inventor: YAMASHITA Yudai, Moriya-shi, Ibaraki 302-0106 (JP)
(74) Representative: J A Kemp LLP
(86) International application number: PCT/JP2023/040883
(87) International publication number: WO 2024/106417

(57) **Abstract**

The fruit flavor beverage according to the embodiment of the present invention contains hexyl hexanoate and has a fruit juice content of 10% by mass or less.

## Description

### TECHNICAL FIELD

The present invention relates to a fruit flavor beverage and a method for enhancing fruitiness of the fruit flavor beverage.

### BACKGROUND ART

The fruit flavor beverage is widely loved by consumers as a beverage that reproduces freshness, richness, and complexity of fruit and is reminiscent of the fruit flavor in a case of being drunk.

In general, such a fruit flavor beverage is manufactured by using any one or more of a fruit juice, an extract from a fruit, a fragrant component obtained by reproducing flavor of a fruit, or the like, and further blending an appropriate amount of a sweetener, an acidifier, or the like.

However, in the fruit flavor beverage of the related art, in a case where the content of the fruit juice is low or the sweetness is further low, it tends to be difficult to impart unique freshness of a freshly squeezed fruit juice, unique richness of a fruit, or thickness of taste (hereinafter, also referred to as "fruitiness").

Therefore, for example, Patent Document 1 discloses that a beverage having excellent thickness of taste of a fruit juice and excellent freshness of a fruit juice can be obtained by containing a specific amount of borneol and decanal in a fruit juice-containing beverage having a fruit juice content of 10% or less.

In addition, Patent Document 2 discloses that a low-sweetness citrus-flavored alcoholic beverage in which thickness of fruit taste is enhanced is obtained by containing a specific amount of lactic acid in a citrus-flavored alcoholic beverage having a fruit juice content of less than 10%.

### RELATED DOCUMENT

### PATENT DOCUMENT

Patent Document 1: Japanese Unexamined Patent Publication No. 2019-135990
Patent Document 2: Japanese Unexamined Patent Publication No. 2020-80774

### SUMMARY OF THE INVENTION

### TECHNICAL PROBLEM

From a viewpoint different from the techniques disclosed in Patent Document 1 and Patent Document 2, the present inventors have studied a method for enhancing unique freshness of a freshly squeezed fruit juice, fruit-like richness, and fruitiness even in a fruit flavor beverage having a relatively low fruit juice content or a fruit flavor beverage having no fruit juice, and have newly found that use of hexyl hexanoate is effective.

### SOLUTION TO PROBLEM

According to the present invention, a fruit flavor beverage and a method for enhancing fruitiness of a fruit flavor beverage are provided as follows.

[1] A fruit flavor beverage containing hexyl hexanoate, in which a fruit juice content is 10% by mass or less.
[2] The fruit flavor beverage according to [1], in which a content of the hexyl hexanoate is 0.01 to 30 ppm.
[3] The fruit flavor beverage according to [1] or [2], further containing sinensal.
[4] The fruit flavor beverage according to [3], in which a content of the sinensal is 0.01 to 70 ppb.
[5] The fruit flavor beverage according to [3] or [4], in which a ratio of a content (ppm) of the hexyl hexanoate to a content (ppb) of the sinensal is 1.5 or more.
[6] The fruit flavor beverage according to any one of [1] to [5], further containing a fruit flavoring.
[7] The fruit flavor beverage according to any one of [1] to [6], in which the fruit flavor beverage is a carbonated beverage.
[8] The fruit flavor beverage according to any one of [1] to [7], in which the fruit flavor beverage is an alcoholic beverage.
[9] The fruit flavor beverage according to any one of [1] to [8], further containing a fruit juice of a citrus.
[10] The fruit flavor beverage according to any one of [1] to [9], further containing a fruit juice of a tropical fruit.
[11] The fruit flavor beverage according to any one of [1] to [10], in which the fruit flavor beverage has a flavor of a citrus.
[12] The fruit flavor beverage according to any one of [1] to [10], in which the fruit flavor beverage has a flavor of a tropical fruit.
[13] The fruit flavor beverage according to any one of [1] to [12], in which a sweetness is 5.0 or less.
[14] The fruit flavor beverage according to any one of [1] to [13], in which citric acid acidity is 0.10 to 0.35 g/100 ml.
[15] The fruit flavor beverage according to any one of [1] to [14], in which the fruit flavor beverage is a container-packed beverage.
[16] A manufacturing method for a fruit flavor beverage, including a step of preparing a beverage by adding hexyl hexanoate, in which a fruit juice content of the fruit flavor beverage is 10% by mass or less.
[17] A method for enhancing fruitiness of a fruit flavor beverage, the method including a step of preparing a beverage by adding hexyl hexanoate, in which a fruit juice content is 10% by mass or less.

### ADVANTAGEOUS EFFECTS OF INVENTION

According to the present invention, it is possible to provide a technique related to a fruit flavor beverage in which a fruitiness can be enhanced.

### DESCRIPTION OF EMBODIMENTS

Hereinafter, embodiments of the present invention will be described in detail. In this specification, the notation "a to b" in the description of numerical ranges means a or more and b or less, unless otherwise specified.

In the present embodiment, the "fruitiness" means that, in a case of being drunk, a unique flavor of a fruit, more specifically, a unique freshness of a freshly squeezed fruit juice, a unique richness of a fruit, a thickness of taste, and the like are obtained in a well-balanced manner.

### <Fruit Flavor Beverage>

The fruit flavor beverage according to the present embodiment (hereinafter, also simply referred to as "beverage") contains hexyl hexanoate and has a fruit juice content of 10% by mass or less. In this manner, it is possible to enhance the fruitiness. That is, in the beverage according to the present embodiment, even though the fruit juice content is 10% by mass or less, the beverage containing hexyl hexanoate can have an enhanced fruitiness than a beverage not containing hexyl hexanoate.

Although the details of such mechanism are unknown, it is presumed that hexyl hexanoate enhances the complexity of the beverage and makes the beverage feel as if it contains a fruit juice, and the refreshing and green scent of hexyl hexanoate is reminiscent of a freshness of fruit, thereby obtaining a "fruitiness" in a case of drinking the beverage.

Hereinafter, components contained in the beverage according to the present embodiment will be described.

### [Hexyl Hexanoate]

Hexyl hexanoate is a type of aroma component, and is also referred to as 1-hexanol hexanoate, hexyl 5-methylpentanoate, or hexyl caproate.

In the beverage according to the present embodiment, the content of hexyl hexanoate is preferably 0.01 to 30 ppm.

In addition, the lower limit value of the content of hexyl hexanoate is preferably 0.05 ppm or more, more preferably 0.5 ppm or more, and still more preferably 1.5 ppm or more. By setting the content of hexyl hexanoate to be equal to or more than the above-described lower limit value, the thickness of taste and the unique freshness of freshly squeezed fruit juice can be improved, and the balance of flavor can be made good.

On the other hand, the upper limit value of the content of hexyl hexanoate is preferably 20 ppm or less, more preferably 15 ppm or less, and still more preferably 8 ppm or less. By setting the content of hexyl hexanoate to be equal to or less than the above-described upper limit value, the thickness of taste and the unique freshness of freshly squeezed fruit juice can be improved, and the balance of flavor can be improved.

### [Sinensal]

It is preferable that the beverage according to the present embodiment further contains sinensal. By using hexyl hexanoate and sinensal in combination, the complexity is improved, and the effect of enhancing the fruitiness is more remarkable.

In addition, by using fruit juice in combination, in addition to hexyl hexanoate and sinensal, the effect of enhancing the fruitiness can be more remarkably obtained.

Sinensal is a type of aroma component also referred to as 2,6-dimethyl-10-methylene-2,6,11-dodecatrienal, and is known to be mainly contained in citrus fruit and the like.

In the beverage according to the present embodiment, the content of sinensal is preferably 0.01 to 70 ppb.

In addition, the lower limit value of the content of sinensal is preferably 0.05 ppb or more, more preferably 0.2 ppb or more, and still more preferably 1.5 ppb or more. By setting the content of sinensal to be equal to or more than the above-described lower limit value, the thickness of taste and the unique freshness of freshly squeezed fruit juice can be improved, and the balance of flavor can be made good.

On the other hand, the upper limit value of the content of sinensal is preferably 60 ppb or less, more preferably 40 ppb or less, and still more preferably 20 ppb or less. By setting the content of sinensal to be equal to or less than the above-described upper limit value, the thickness of taste and the unique freshness of freshly squeezed fruit juice can be improved, and the balance of flavor can be made good. In addition, from the viewpoint of improving the flavor balance, the upper limit value of the content of sinensal may be 10 ppb or less or 8 ppb or less.

In the present embodiment, the ratio of the content (ppm) of hexyl hexanoate to the content (ppb) of sinensal is preferably 1.5 or more, more preferably 2.0 or more, still more preferably 2.5 or more, and even still more preferably 4.0 or more. As a result, it is possible to suppress the excessive generation of sinensal, which leads to an increase in green odor and a decrease in preference.

The concentration of the aroma component in the beverage can be determined by a solid phase microextraction method (SPME) using a gas chromatograph mass spectrometer. Specifically, the concentration of hexyl hexanoate can be measured under the following conditions.

The hexyl hexanoate concentration (ppm) can be subjected to GC/MS measurement by a multi volatile method (MVM) method using MPS manufactured by GERSTEL GmbH & Co.KG, and measured under the following conditions.

### Apparatus:

GC: 6890 manufactured by Agilent Technologies, Inc.
MS: 5975C MSD manufactured by Agilent Technologies, Inc.
HS: MPS manufactured by Gerstel GmbH & Co. KG

### Analysis conditions:

· CIS: 10°C (0.5 min) - 12 °C/s - 300°C (5 min)
· TDU: 40°C (0.5 min) - 720 °C/min - 300°C (3 min)
· TDU transfer line: 300°C
· Column: DB-5 (60 m, Φ of 0.25 mm, film thickness of 0.25 µm) (Agilent J&W)
· Oven temperature: 40°C (5 min) - 10 °C/min - 300°C (5 min)
· MSD transfer line: 300°C
· Carrier gas: helium, 2.11 mL/min
· Ionization method: electron ionization (EI) method
· Ionization voltage: 70 eV
· Ion source temperature: 230°C
· Quadruple temperature: 150°C

### [Fruit Juice]

In the beverage according to the present embodiment, the content of the fruit juice (in terms of straight fruit juice) is 10% by mass or less. The content of the fruit juice is preferably 8.0% by mass or less, and more preferably 6.0% by mass or less, 4.0% by mass or less, 3.0% by mass or less, 2.0% by mass or less, 1.5% by mass or less, and 1.0% by mass or less in this order. As a result, the effect of enhancing the fruitiness is more remarkable even though the fruit juice content is low.

In addition, the beverage according to the present embodiment may have a fruit juice content of less than 5% or may be a non-fruit juice (a fruit juice content of 0.0%).

The content of the fruit juice is a relative concentration in a case where a Brix value or an acidity of a squeezed juice (straight fruit juice) of fruit juice, which is obtained by squeezing fruit juice from a fruit and not subjected to a treatment such as concentration is set to 100%. Whether the content of the fruit juice is calculated based on any of the Brix value or the acidity is determined for each type of fruit juice based on the JAS standard. In addition, in a case where the content of the fruit juice is converted based on the Brix value of the JAS standard, the Brix value of the sugars, honey, and the like added to the fruit juice is excluded from the calculation.

The fruit juice refers to a liquid component obtained by crushing a fruit and squeezing a fruit juice, straining the fruit juice, or the like. In addition, the fruit juice may include a concentrated liquid of the liquid component or a diluted product thereof, and may be a liquid containing pulp or a liquid from which pulp has been removed by a treatment such as filtration or centrifugation.

In addition, as the fruit juice, straight fruit juice, concentrated fruit juice, fruit juice from a concentrate, and the like may be used.

Examples of the fruit juice include citrus fruit juice, tropical fruit juice, grape juice, apple juice, pear juice, peach juice, strawberry juice, and the like. These may be used singly or in combination of two or more.

The above-described citrus fruit means a fruit of plants belonging to Rutaceae Aurantioideae, and specific examples thereof include oranges such as Navel orange, Valencia orange, and Blood orange, citruses such as Unshu orange, Mandarin orange, Ponkan, Kishu orange, Encore, Tangerine, Koji, Shekwasha, Tachibana, and Shiranui, miscellaneous citruses such as Natsudaidai, Hassaku, Hyuganatsu, Sanbokan, Kawachi bankan, Kinukawa, and Naruto, tangors and tangeloes such as Tankan, Iyokan, Murcott, Kiyomi, an Orlando, Minneola, and Seminole, limes such as Mexican lime and Tahiti lime, lemons such as Lisbon lemon, Eureka lemon, Diamante, and Etrog, a shaddock such as Banpeiyu and Tosa shaddock, grapefruits such as Duncan, Marsh, Thompson, and Ruby red, citrons such as Yuzu, Kabosu, Sudachi, Hanayu, and Kizu, Kumquat, Trifoliate orange, and the like. Among these, oranges and lemons, which have an acid taste and sweetness and have strong freshness, are preferable.

The tropical fruit means a fruit of a tropical fruit tree native to tropical or subtropical regions, and specific examples thereof include pineapple, mango, banana, papaya, lychee, passion fruit, dragon fruit, guava, kiwi, acerola, avocado, star fruit, mangosteen, rambutan, and the like.

The beverage according to the present embodiment preferably contains a fruit juice of the citrus fruit and/or a fruit juice of the tropical fruit, and more preferably contains the fruit juice of the citrus fruit.

The fruit that can be used for preparing the fruit juice according to the present embodiment is not particularly limited in terms of the variety, the production area, the ripeness, the size, and the like, and can be appropriately set.

In addition, the beverage according to the present embodiment may be prepared using commercially available juice, concentrated juice, paste, or the like as the fruit juice. Specific examples thereof include a juice or concentrated juice designated by the Japanese Agricultural Standards (JAS) (Japanese Agricultural Standards for fruit beverages), and one or two or more types thereof can be used for the preparation of the beverage according to the present embodiment.

### [Other Components]

The beverage of the present embodiment may contain various ingredients other than the above as long as the effects of the present invention can be obtained. For example, a sweetener, an acidifier, a fragrance other than those described above, a pH adjuster, various nutritional components, a coloring agent, a diluent, an antioxidant, a thickener stabilizer, and the like may be contained.

As the above-described sweetener, known sweeteners can be used, and examples thereof include saccharides such as sucrose (sugar), glucose, granulated sugar, fructose, lactose, maltose, and fructose-glucose liquid sugar, sugar alcohols, and high-sweetness sweeteners such as thaumatin, stevia extract, disodium glycyrrhizate, acesulfame potassium, sucralose, aspartame, saccharin, neotame, sodium saccharin, stevia, and the like. The sweetener may be used alone or in combination of two or more.

Examples of the acidifiers described above include anhydrous citric acid, adipic acid, gluconic acid, succinic acid, tartaric acid, lactic acid, fumaric acid, malic acid, phytic acid, acetic acid, phosphoric acid, salts thereof, and the like. Among these, from the viewpoint of obtaining fruitiness, anhydrous citric acid and a salt thereof are preferable.

Examples of the above-described fragrance include a natural fragrance and a synthetic fragrance, and it is preferable that the fragrance contains at least a fruit flavoring.

Examples of the fruit flavoring include flavorings having flavors of citrus fruits, tropical fruits, grapes, apples, peaches, strawberries, and the like. Examples of the citrus fruits and the tropical fruits include the same ones as those described in the fruit juice.

In this manner, the fruitiness enhancement effect is more remarkable.

Hereinafter, various characteristics of the beverage according to the present embodiment will be described.

### [Fruit Flavor]

The beverage according to the present embodiment has a fruit flavor in a case of being drunk.

Examples of the fruit include citrus fruits, tropical fruits, grapes, apples, peaches, strawberries, and the like. Examples of the citrus fruits and the tropical fruits include the same ones as those described in the fruit juice.

The beverage according to the present embodiment preferably has a citrus flavor and/or a tropical fruit flavor, and more preferably has a citrus fruit flavor.

### [Sweetness]

A sweetness of the beverage according to the present embodiment is preferably 5.0 or less, and more preferably 4.0 or less. On the other hand, the sweetness may be 0.

In this manner, the fruitiness enhancement effect is more remarkably obtained.

The sweetness can be adjusted by, for example, the above-described sweetener, the fruit juice, and various other components.

It is noted that the sweetness is a parameter indicating the intensity of sweetness of each sweetener when compared with sucrose. Values described in "Comprehensive List of Sweeteners" (published by Japan Sugar Refiners' Association, May 1990), "All About High-sweetness Sweetener Sucralose" (published by Korin Publishing Co., Ltd., May 2003), "Glossary of Beverages" (published by Beverage Japan Inc., June 25, 1999), or the like can be adopted. In a case where the value of sweetness described varies, the median value is adopted. For example, as the sweetness of the representative sweeteners, sucrose is 1, glucose is 0.65, fructose is 1.5, sucralose is 600, acesulfame potassium is 200, and aspartame is 200.

### [Acidity]

The beverage according to the present embodiment preferably has citric acid acidity of 0.10 to 0.35 g/100 ml, and more preferably has citric acid acidity of 0.15 to 0.30 g/100 ml.

By setting the acidity to be in the above-described numerical range, an appropriate acid taste is obtained, and it is easy to enhance the fruitiness.

The citric acid acidity can be adjusted, for example, by the amount of the above-described acidifier, a fruit juice, and various other components, or the like.

The citric acid acidity can be expressed in grams in a case where the amount of acid contained in 100 ml is converted to citric acid (anhydrous citric acid g/100 ml). The acidity can also be measured by a method defined by the JAS standard acidity measurement method, specifically by a neutralization titration method (quantitative) using a 0.1 mol/L sodium hydroxide standard solution as an alkaline solution.

### [pH]

The pH of the beverage of the present embodiment at 20°C is preferably 2.8 to 4.6, more preferably 3.1 to 4.2, and still more preferably 3.2 to 3.8.

In a case of setting the pH to be within the above-described numerical value range, it is easier to obtain a fruitiness.

It is possible to carry out the pH measurement by using a commercially available pH measuring device or the like. It is possible to adjust the pH, for example, by changing the amount of a specific acid, by using a pH adjuster such as trisodium citrate.

### [Carbon Dioxide Gas]

The beverage according to the present embodiment may contain carbon dioxide gas. The carbon dioxide gas pressure of the beverage is preferably 1.5 to 3.5 gas volumes and more preferably 2.0 to 3.0 gas volumes. The feeling of carbonic acid can improve preference.

The method of incorporating carbon dioxide gas into the beverage is not particularly limited, and can be appropriately set by those skilled in the art.

In a case of containing carbon dioxide gas, a beverage from which carbon dioxide gas has been removed by a known method is used for measurement of pH, acidity, and the like.

### [Type of Beverage]

The beverage according to the present embodiment is preferably a beverage that is drunk as it is without being diluted.

In addition, the beverage according to the present embodiment may be an alcoholic beverage containing alcohol. The content of the alcohol is not particularly limited, but is preferably 0.1% to 20% by volume/volume and more preferably 2% to 10% by volume/volume.

### [Container]

Examples of the container used for the beverage of the present embodiment include a hermetically sealed container made of a single substance such as glass, paper, plastic (polyethylene terephthalate, and the like), aluminum, steel, a composite material thereof, or a laminated material. In addition, the type of container is not particularly limited, but examples thereof include PET bottles, aluminum cans, steel cans, paper packs, chilled cups, and bottles.

The volume of the beverage is not particularly limited, but is preferably 100 to 2,000 ml, and more preferably 100 to 500 ml from the viewpoint of easy drinking off.

The method of heat sterilization for packaged beverages is not particularly limited, but heat sterilization is performed in accordance with the provisions of the Food Sanitation Act in Japan. Specific examples thereof include a method of sterilizing the beverage at a high temperature for a short time and then filling a storage container sterilized under aseptic conditions (UHT sterilization method) and a retort sterilization method of filling a storage container such as a can with the preparation solution and then performing retort processing.

### <Manufacturing Method for Fruit Flavor Beverage>

The manufacturing method for a fruit flavor beverage according to the present embodiment includes a step of preparing a beverage by adding hexyl hexanoate in a beverage having a fruit juice content of 10% by mass or less. In this manner, the fruitiness of the beverage having a fruit juice content of 10% by mass or less can be enhanced. The details of the fruit flavor beverage according to the present embodiment are the same as those of the above-described beverage. In addition, a known method can be used as the addition method and the like.

Hereinafter, an example of a reference form according to the manufacturing method will be described.
<1> A manufacturing method for a fruit flavor beverage, including a step of preparing a beverage by adding hexyl hexanoate, in which a fruit juice content of the fruit flavor beverage is 10% by mass or less.
<2> The manufacturing method for a fruit flavor beverage according to <1>, in which an adding amount of the hexyl hexanoate is 0.01 to 30 ppm.
<3> The manufacturing method for a fruit flavor beverage according to <1> or <2>, in which in the step of preparing the beverage, sinensal is further added.
<4> The manufacturing method for a fruit flavor beverage according to <3>, in which in the step of preparing the beverage, an adding amount of the sinensal is 0.01 to 70 ppb.
<5> The manufacturing method for a fruit flavor beverage according to <3> or <4>, in which a ratio of an adding amount (ppm) of the hexyl hexanoate to an adding amount (ppb) of the sinensal is 1.5 or more.
<6> The manufacturing method for a fruit flavor beverage according to any one of <1> to <5>, in which in the step of preparing the beverage, a fruit flavoring is further added.
<7> The manufacturing method for a fruit flavor beverage according to any one of <1> to <6>, in which in the step of preparing the beverage, a carbon dioxide gas is further enclosed to prepare a carbonated beverage.
<8> The manufacturing method for a fruit flavor beverage according to any one of <1> to <7>, in which the beverage is an alcoholic beverage.
<9> The manufacturing method for a fruit flavor beverage according to any one of <1> to <8>, in which in the step of preparing the beverage, a fruit juice of a citrus is further added.
<10> The manufacturing method for a fruit flavor beverage according to any one of <1> to <9>, in which in the step of preparing the beverage, a fruit juice of a tropical fruit is further added.
<11> The manufacturing method for a fruit flavor beverage according to any one of <1> to <10>, in which the beverage has a flavor of a citrus.
<12> The manufacturing method for a fruit flavor beverage according to any one of <1> to <10>, in which the beverage has a flavor of a tropical fruit.
<13> The manufacturing method for a fruit flavor beverage according to any one of <1> to <12>, in which the beverage has a sweetness of 5.0 or less.
<14> The manufacturing method for a fruit flavor beverage according to any one of <1> to <13>, in which citric acid acidity of the beverage is 0.10 to 0.35 g/100 ml.
<15> The manufacturing method for a fruit flavor beverage according to any one of <1> to <14>, further comprising: a step of packing the beverage in a container after the step of preparing the beverage.

### <Method for Enhancing Fruitiness of Fruit Flavor Beverage>

The method for enhancing fruitiness of a fruit flavor beverage according to the present embodiment includes a step of preparing a beverage by adding hexyl hexanoate in a beverage having a fruit juice content of 10% by mass or less. In this manner, the fruitiness of the beverage having a fruit juice content of 10% by mass or less can be enhanced. The details of the fruit flavor beverage according to the present embodiment are the same as those of the above-described beverage. In addition, a known method can be used as the addition method and the like.

Although the embodiments of the present invention have been described above, these are examples of the present invention, and various configurations other than those described above can be employed.

### Examples

Hereinafter, the present invention will be described with reference to Examples and Comparative Examples, but the present invention is not limited to these.

### (1) Physical Properties of Beverage

· Acidity: The number of grams (g of anhydrous citric acid/100 ml) in a case where the amount of acid contained in 100 ml of the beverage is converted into citric acid was measured based on a method determined by the acidity measuring method of JAS standards, and calculated.

### (2) Sensory Evaluation

A sensory test was performed by a trained technician for each beverage. Specifically, five skilled technicians each tasted the beverage (20°C), and for each of the "thickness of taste (richness)", the "freshness of fruit juice", and the "overall evaluation of flavor", which were felt at the time of tasting, a 7-point evaluation was performed in which each control (contrast) was set to 0 points according to the following evaluation criteria, and the average value thereof was calculated.

### · Evaluation criteria

Evaluation point +3: considerably strong (or considerably good)
Evaluation point +2: strong (or good)
Evaluation point +1: somewhat strong (or somewhat good)
Evaluation point 0: same level
Evaluation point -1: somewhat weak (or somewhat inferior)
Evaluation point -2: weak (or inferior)
Evaluation point -3: considerably weak (or considerably inferior)

### (3) Examples, Comparative Examples, and Reference Examples

### [Experiment 1] Verification of Effect of Hexyl Hexanoate

Each raw material was mixed by a method of the related art to have the concentration (g/1000 ml) and the carbon dioxide gas pressure (gas volume) shown in Table 1, thereby obtaining a base liquid.

Hexyl hexanoate was mixed with the base liquid to have a concentration (ppm) shown in Table 2, thereby obtaining a beverage. For the beverage obtained, the measurement and sensory evaluation of (1) and (2) described above, were performed. Table 2 shows the results.

**[Table 1]**

| Base liquid (Acidity 0.25, Sweetness 3.0, Carbon dioxide gas pressure 2.3 GV, pH 3.4) | |
|---|---|
| Raw material | Blending amount |
| Sucrose | 30.0 g |
| Citric acid (anhydrous) | 2.5 g |
| Trisodium citrate | 0.8 g |
| Water | Balance |
| Total | 1000 ml |

**[Table 2]**

| | 1-0 Contrast | 1-1 | 1-2 | 1-3 | 1-4 | 1-5 | 1-6 | 1-7 |
|---|---|---|---|---|---|---|---|---|
| Base liquid (ml) | 1,000 | 1,000 | 1,000 | 1,000 | 1,000 | 1,000 | 1,000 | 1,000 |
| Hexyl hexanoate (ppm) | 0 | 0.01 | 0.1 | 1.0 | 5.0 | 10.0 | 25.0 | 50.0 |

| Sensory evaluation result | | | | | | | | |
|---|---|---|---|---|---|---|---|---|
| (1) Thickness of taste (richness) (weak -3 ↔ strong +3) | 0 | 0.8 | 1.0 | 2.0 | 3.0 | 2.8 | 2.2 | 1.8 |
| (2) Freshness of fruit juice (weak -3 ↔ strong +3) | 0 | 1.0 | 1.4 | 2.2 | 2.6 | 2.0 | 2.0 | 1.0 |
| (3) Overall evaluation of flavor (inferior -3 ↔ good +3) | 0 | 1.0 | 1.0 | 2.0 | 3.0 | 2.8 | 1.6 | -0.6 |
| Free comment | | | | Reminiscent of acid taste, fresh | Ester, good fruit juice feeling, juicy, green | Juicy, green | | Heavy, Solvent odor |

### [Experiment 2] Verification of Effect of Use of Hexyl Hexanoate and Sinensal in Combination I

Using the base liquid produced in Experiment 1, hexyl hexanoate and sinensal were mixed with the base liquid to have the concentrations (ppm or ppb) shown in Table 3, thereby obtaining a beverage. For the beverage obtained, the measurement and sensory evaluation of (1) and (2) described above, were performed. Table 3 shows the results.

The sensory evaluation was performed using the sample 1-2 (hexyl hexanoate concentration of 0.1 ppm) produced in Experiment 1 as a contrast (evaluation point: 0).

**[Table 3]**

| | 1-2 Contrast | 2-1 | 2-2 | 2-3 | 2-4 | 2-5 | 2-6 |
|---|---|---|---|---|---|---|---|
| Base liquid (ml) | 1,000 | 1,000 | 1,000 | 1,000 | 1,000 | 1,000 | 1,000 |
| (A) Hexyl hexanoate (ppm) | 0.1 | 0.1 | 0.1 | 0.1 | 0.1 | 0.1 | 0.1 |
| (B) Sinensal (ppb) | 0 | 0.01 | 0.1 | 1.0 | 10.0 | 50.0 | 100.0 |
| (A) / (B) | | 10,000 | 1,000 | 100 | 10 | 2 | 1 |

| Sensory evaluation result | | | | | | | |
|---|---|---|---|---|---|---|---|
| (1) Thickness of taste (richness) (weak -3 ↔ strong +3) | 0 | 1.0 | 2.0 | 2.0 | 3.0 | 3.0 | 2.2 |
| (2) Freshness of fruit juice (weak -3 ↔ strong +3) | 0 | 1.0 | 1.2 | 2.0 | 2.4 | 1.0 | 1.0 |
| (3) Overall evaluation of flavor (inferior -3 ↔ good +3) | 0 | 1.0 | 2.0 | 3.0 | 2.6 | 1.2 | -0.2 |
| Free comment | | | Solvent-like flavor | Thickness of taste, good balance | Thickness of taste, rich fruit juice feeling, somewhat astringent taste, good balance | | Negative green odor, heavy |

### [Experiment 3] Verification of Effect of Use of Hexyl Hexanoate and Sinensal in Combination II

Using the base liquid produced in Experiment 1, hexyl hexanoate and sinensal were mixed with the base liquid to have the concentrations (ppm or ppb) shown in Table 4, thereby obtaining a beverage. For the beverage obtained, the measurement and sensory evaluation of (1) and (2) described above, were performed. Table 4 shows the results.

The sensory evaluation was performed using the sample 1-5 (hexyl hexanoate concentration of 10 ppm) produced in Experiment 1 as a contrast (evaluation point: 0).

**[Table 4]**

| | 1-5 Contrast | 3-1 | 3-2 | 3-3 | 3-4 | 3-5 | 3-6 |
|---|---|---|---|---|---|---|---|
| Base liquid (ml) | 1,000 | 1,000 | 1,000 | 1,000 | 1,000 | 1,000 | 1,000 |
| (A) Hexyl hexanoate concentration (ppm) | 10 | 10 | 10 | 10 | 10 | 10 | 10 |
| (B) Sinensal concentration (ppb) | 0 | 0.01 | 0.1 | 1.0 | 10.0 | 50.0 | 100.0 |
| (A) / (B) | | 1,000,000 | 100,000 | 10, 000 | 1,000 | 200 | 100 |

| Sensory evaluation result | | | | | | | |
|---|---|---|---|---|---|---|---|
| (1) Thickness of taste (richness) (weak -3 ↔ strong +3) | 0 | 1.0 | 1.0 | 2.0 | 2.8 | 3.0 | 2.0 |
| (2) Freshness of fruit juice (weak -3 ↔ strong +3) | 0 | 1.0 | 1.4 | 2.6 | 2.4 | 2.0 | 0.6 |
| (3) Overall evaluation of flavor (inferior -3 ↔ good +3) | 0 | 1.0 | 1.0 | 2.0 | 2.8 | 2.2 | 0.0 |
| Comment | | | | Moderate fruit juice feeling, good balance | Sufficient fruit juice feeling, best balance, juicy | | Negative green odor, heavy |

### [Experiment 4] Verification of effect of Use of fruit flavorings in Combination I

Using the base liquid produced in Experiment 1, hexyl hexanoate, sinensal, and a citrus flavoring (orange flavoring or lemon flavoring) were mixed with the base liquid to have the concentrations (ppm or ppb) shown in Table 5, thereby obtaining a beverage. For the beverage obtained, the measurement and sensory evaluation of (1) and (2) described above, were performed. The results are shown in Table 5.

Hexyl hexanoate and sinensal were not detected from the used citrus flavoring.

**[Table 5]**

| | 1-0 Contrast | 4-1 | 4-2 | 5-1 | 5-2 |
|---|---|---|---|---|---|
| Base liquid (ml) | 1,000 | 1,000 | 1,000 | 1,000 | 1,000 |
| Hexyl hexanoate concentration (ppm) | 0 | 0 | 0.1 | 0 | 0.1 |
| Sinensal concentration (ppb) | 0 | 0 | 10 | 0 | 10 |
| Orange flavor (ppm) | 0 | 500 | 500 | 0 | 0 |
| Lemon flavor (ppm) | 0 | 0 | 0 | 500 | 500 |

| Sensory evaluation result | | | | | |
|---|---|---|---|---|---|
| (1)Thickness of taste (richness) (weak -3 ↔ strong +3) | 0 | 1.0 | 2.8 | 1.2 | 2.2 |
| (2) Freshness of fruit juice (weak -3 ↔ strong +3) | 0 | 1.0 | 2.2 | 1.2 | 2.8 |
| (3)Overall evaluation of flavor (inferior -3 ↔ good +3) | 0 | 1.2 | 2.8 | 1.0 | 3.0 |
| Free comment | | | Fruity, increased thickness, freshness | | Best balance in feeling sweetness and acid taste, increased fruit juice feeling |

### [Experiment 5] Verification of effect of Use of fruit flavorings in Combination II

Using the base liquid produced in Experiment 1, hexyl hexanoate, sinensal, and a tropical fruit flavoring (passion fruit flavoring or pineapple flavoring) were mixed with the base liquid to have the concentrations (ppm or ppb) shown in Table 6, thereby obtaining a beverage. For the beverage obtained, the measurement and sensory evaluation of (1) and (2) described above, were performed. Table 6 shows the results.

Hexyl hexanoate and sinensal were not detected from the used tropical fruit flavoring.

**[Table 6]**

| | 1-0 Contrast | 6-1 | 6-2 | 7-1 | 7-2 |
|---|---|---|---|---|---|
| Base liquid (ml) | 1,000 | 1,000 | 1,000 | 1,000 | 1,000 |
| Hexyl hexanoate concentration (ppm) | 0 | 0 | 0.1 | 0 | 0.1 |
| Sinensal concentration (ppb) | 0 | 0 | 10 | 0 | 10 |
| Passion fruit flavor (ppm) | 0 | 300 | 300 | 0 | 0 |
| Pineapple flavor (ppm) | 0 | 0 | 0 | 300 | 300 |

| Sensory evaluation result | | | | | |
|---|---|---|---|---|---|
| (1)Thickness of taste (richness) (weak -3 ↔ strong +3) | 0 | 1.0 | 3.0 | 1.0 | 2.2 |
| (2) Freshness of fruit juice (weak -3 ↔ strong +3) | 0 | 1.0 | 2.2 | 1.0 | 3.0 |
| (3) Overall evaluation of flavor (inferior -3 ↔ good +3) | 0 | 1.0 | 3.0 | 1.0 | 2.8 |
| Free comment | | | Tropical, Thick and suitable for passion, increased fruitiness | | Increased freshness of pineapple, brightness |

### [Experiment 6] Verification of effect of Use of fruit juice in Combination I

Using the base liquid produced in Experiment 1, hexyl hexanoate, sinensal, and lemon juice (g; straight converted using lemon transparent concentrated fruit juice) were mixed with the base liquid to have the concentrations (ppm or ppb) shown in Table 7, thereby obtaining a beverage. For the beverage obtained, the measurement and sensory evaluation of (1) and (2) described above, were performed. Table 7 shows the results.

Hexyl hexanoate and sinensal were not detected from the lemon transparent concentrated fruit juice used.

**[Table 7]**

| | 1-0 Contrast | 8-1 | 8-2 | 8-3 | 8-4 |
|---|---|---|---|---|---|
| Base liquid (ml) | 1,000 | 1,000 | 1,000 | 1,000 | 1,000 |
| Hexyl hexanoate concentration (ppm) | 0 | 0 | 0.1 | 0.1 | 0.1 |
| Sinensal concentration (ppb) | 0 | 0 | 10 | 10 | 10 |
| Lemon juice (g) | 0 | 1 | 1 | 10 | 50 |

| Sensory evaluation result | | | | | |
|---|---|---|---|---|---|
| (1) Thickness of taste (richness) (weak -3 ↔ strong +3) | 0 | 1.2 | 2.8 | 3.0 | 2.8 |
| (2) Freshness of fruit juice (weak -3 ↔ strong +3) | 0 | 1.2 | 2.4 | 2.6 | 2.4 |
| (3) Overall evaluation of flavor (inferior -3 ↔ good +3) | 0 | 1.0 | 2.6 | 2.8 | 2.6 |
| Free comment | | | Fresh | Good balance | Body, fresh, fruitiness |

### [Experiment 7] Verification of effect of Use of fruit juice in Combination II

Using the base produced in Experiment 1, each of hexyl hexanoate, sinensal, and any fruit juice selected from passion fruit juice, pineapple juice, orange juice, lime juice, grapefruit juice, peach juice, and grape juice (g: any fruit juice was straight converted using a transparent concentrated fruit juice) was mixed with the base liquid to have the concentrations (ppm or ppb) shown in Table 8, thereby obtaining a beverage. For the beverage obtained, the measurement and sensory evaluation of (1) and (2) described above, were performed. Table 8 shows the results.

Hexyl hexanoate and sinensal were not detected from each fruit juice used.

**[Table 8]**

| | 1-0 Contrast | 9-1 | 9-2 | 10-1 | 10-2 | 11-1 | 11-2 | 12-1 | 12-2 | 13-1 | 13-2 | 14-1 | 14-2 | 15-1 | 15-2 |
|---|---|---|---|---|---|---|---|---|---|---|---|---|---|---|---|
| Base liquid (ml) | 1,000 | 1,000 | 1,000 | 1,000 | 1,000 | 1,000 | 1,000 | 1,000 | 1,000 | 1,000 | 1,000 | 1,000 | 1,000 | 1,000 | 1,000 |
| Hexyl hexanoate (ppm) | 0 | 0 | 0.1 | 0 | 0.1 | 0 | 0.1 | 0 | 0.1 | 0 | 0.1 | 0 | 0.1 | 0 | 0.1 |
| Sinensal (ppb) | 0 | 0 | 10 | 0 | 10 | 0 | 10 | 0 | 10 | 0 | 10 | 0 | 10 | 0 | 10 |
| Passion fruit juice (g) | 0 | 10 | 10 | 0 | 0 | 0 | 0 | 0 | 0 | 0 | 0 | 0 | 0 | 0 | 0 |
| Pineapple juice (g) | 0 | 0 | 0 | 10 | 10 | 0 | 0 | 0 | 0 | 0 | 0 | 0 | 0 | 0 | 0 |
| Orange juice (g) | 0 | 0 | 0 | 0 | 0 | 10 | 10 | 0 | 0 | 0 | 0 | 0 | 0 | 0 | 0 |
| Lime juice (g) | 0 | 0 | 0 | 0 | 0 | 0 | 0 | 10 | 10 | 0 | 0 | 0 | 0 | 0 | 0 |
| Grapefruit juice (g) | 0 | 0 | 0 | 0 | 0 | 0 | 0 | 0 | 0 | 10 | 10 | 0 | 0 | 0 | 0 |
| Peach juice (g) | 0 | 0 | 0 | 0 | 0 | 0 | 0 | 0 | 0 | 0 | 0 | 10 | 10 | 0 | 0 |
| Grape juice (g) | 0 | 0 | 0 | 0 | 0 | 0 | 0 | 0 | 0 | 0 | 0 | 0 | 0 | 10 | 10 |

| Sensory evaluation result | | | | | | | | | | | | | | | |
|---|---|---|---|---|---|---|---|---|---|---|---|---|---|---|---|
| (1)Thickness of taste (richness) (weak -3 ↔ strong +3) | 0 | 1.0 | 2.6 | 1.0 | 2.6 | 1.0 | 3.0 | 1.0 | 2.6 | 1.0 | 3.0 | 1.0 | 2.8 | 1.0 | 2.8 |
| (2)Freshness of fruit juice (weak -3 ↔ strong +3) | 0 | 1.0 | 2.4 | 1.0 | 2.2 | 1.0 | 2.2 | 1.0 | 2.8 | 1.0 | 2.2 | 1.0 | 2.2 | 1.0 | 2.2 |
| (3)Overall evaluation of flavor (inferior -3 ↔ good +3) | 0 | 1.2 | 2.8 | 1.0 | 2.8 | 1.0 | 2.6 | 1.2 | 2.8 | 1.2 | 2.8 | 1.2 | 2.8 | 1.4 | 2.8 |
| Free comment | | | Tropical, increased freshness | | Fresh | | Increased fruit juice | | Green, freshly squeeze feeling | | Thickness of taste, fresh | | Fruitiness | | Juicy |

This application claims priority on the basis of Japanese Patent Application No. 2022-182327 filed on November 15, 2022, the entire disclosure of which is incorporated into the present specification.

## Claims

1. A fruit flavor beverage comprising:
hexyl hexanoate,
wherein a fruit juice content is 10% by mass or less.

2. The fruit flavor beverage according to Claim 1,
wherein a content of the hexyl hexanoate is 0.01 to 30 ppm.

3. The fruit flavor beverage according to Claim 1 or 2, further comprising:
sinensal.

4. The fruit flavor beverage according to Claim 3,
wherein a content of the sinensal is 0.01 to 70 ppb.

5. The fruit flavor beverage according to Claim 3,
wherein a ratio of a content (ppm) of the hexyl hexanoate to a content (ppb) of the sinensal is 1.5 or more.

6. The fruit flavor beverage according to Claim 1 or 2, further comprising:
a fruit flavoring.

7. The fruit flavor beverage according to Claim 1 or 2,
wherein the fruit flavor beverage is a carbonated beverage.

8. The fruit flavor beverage according to Claim 1 or 2,
wherein the fruit flavor beverage is an alcoholic beverage.

9. The fruit flavor beverage according to Claim 1 or 2,
wherein the fruit flavor beverage has a flavor of a citrus.

10. The fruit flavor beverage according to Claim 1 or 2, further comprising:
a fruit juice of a citrus.

11. The fruit flavor beverage according to Claim 1 or 2,
wherein the fruit flavor beverage has a flavor of a tropical fruit.

12. The fruit flavor beverage according to Claim 1 or 2, further comprising:
a fruit juice of a tropical fruit.

13. The fruit flavor beverage according to Claim 1 or 2,
wherein a sweetness is 5.0 or less.

14. The fruit flavor beverage according to Claim 1 or 2,
wherein a citric acid acidity is 0.10 to 0.35 g/100 ml.

15. The fruit flavor beverage according to Claim 1 or 2,
wherein the fruit flavor beverage is a container-packed beverage.

16. A manufacturing method for a fruit flavor beverage, comprising:
a step of preparing a beverage by adding hexyl hexanoate,
wherein a fruit juice content of the fruit flavor beverage is 10% by mass or less.

17. A method for enhancing fruitiness of a fruit flavor beverage, the method comprising:
a step of preparing a beverage by adding hexyl hexanoate,
wherein a fruit juice content is 10% by mass or less.
